(19) Europäisches Patentamt
European Patent Office
Office européen des brevets

(11) **EP 4 478 323 A1**

(12) **EUROPEAN PATENT APPLICATION**

(43) Date of publication:
**18.12.2024 Bulletin 2024/51**

(21) Application number: **23195701.0**

(22) Date of filing: **06.09.2023**

(51) International Patent Classification (IPC):
*G08G 1/01* *(2006.01)*    *G08G 1/017* *(2006.01)*
*G08G 1/052* *(2006.01)*    *G08G 1/0962* *(2006.01)*
*G08G 1/00* *(2006.01)*    *G06F 21/31* *(2013.01)*
*G06F 21/45* *(2013.01)*    *H04L 9/32* *(2006.01)*
*H04L 9/40* *(2022.01)*    *H04W 12/08* *(2021.01)*
*G06V 20/58* *(2022.01)*

(52) Cooperative Patent Classification (CPC):
**G08G 1/0112; G06V 10/507; G06V 10/56;
G06V 20/584; G08G 1/017; G08G 1/052;
G08G 1/09623; G08G 1/09626; G08G 1/207;
H04L 9/3228;** G06F 21/31

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.06.2023   KR 20230076220**

(71) Applicant: **Newns Co., Ltd
Gunpo-si, Gyeonggi-do 15880 (KR)**

(72) Inventors:
• **KIM, Woo Chan
Uiwang-si, Gyeonggi-do 16096 (KR)**

• **LEE, Min Woo
Seongnam-si, Gyeonggi-do 13500 (KR)**
• **CHOI, Kyung Muk
Seoul 08007 (KR)**
• **OH, Jin Hwan
Anyang-si, Gyeonggi-do 14126 (KR)**
• **LEE, Woo Yeol
Gunpo-si, Gyeonggi-do 15863 (KR)**
• **JEONG, Seong Deok
Incheon 21457 (KR)**
• **DOO, Young Soo
Siheung-si, Gyeonggi-do 14907 (KR)**

(74) Representative: **M. Zardi & Co S.A.
Via G. B. Pioda, 6
6900 Lugano (CH)**

(54) **ELECTRONIC TERMINAL DEVICE CAPABLE OF COLLECTING HISTORY INFORMATION FOR DETERMINING WHETHER A TWO WHEELED VEHICLE DRIVER IS DRIVING LAW ABIDINGLY**

(57)    The present invention proposes an electronic terminal device attached to a two-wheeled vehicle, which can collect and store signal violation history information , intrusion history information in prohibited areas, and speed violation history information of the driver of the two-wheeled vehicle, and store them in a database, so that the user can use this history information based on As a result, it is possible to support the two-wheeled vehicle driver to more easily determine whether or not he or she is driving in compliance with the law.

Fig. 1

EP 4 478 323 A1

# EP 4 478 323 A1

**Description**

[TECHNICAL FIELD]

The present invention provides a GPS ( Global Positioning System ) for location tracking and a front An electronic terminal device equipped with a camera for photographing and attachable to a two-wheeled vehicle is related to an electronic terminal device capable of collecting history information for determining whether a two-wheeled vehicle driver is driving law-abidingly.

[BACKGROUND ART]

Recently, as the proportion of single-person households increases, non-face-to-face consumption such as delivery is being activated. In addition, in relation to such delivery, the frequency of use of two-wheeled vehicles and the frequency of traffic accidents are also increasing.

Here, the two-wheeled vehicle has a higher risk of accident than the four-wheeled vehicle, and has a very high probability of damaging the body of the driver of the two-wheeled vehicle in the event of an accident.

On the other hand, one of the main causes of increasing the frequency of motorcycle accidents is non-compliance with laws by motorcycle drivers. For this reason, it is necessary to introduce a system for reducing the frequency of motorcycle accidents by inducing law-abiding driving by drivers of motorcycles.

this regard, if the two-wheeled vehicle driver's signal violation history information, traffic prohibited section intrusion history information, and speed violation history information are collected and databased, and then these information can be provided to the two-wheeled vehicle driver in the future, the two-wheeled vehicle driver will Whether or not law-abiding driving can be determined objectively, and from this, the two-wheeled vehicle driver's law-abiding driving can be naturally induced.

[SUMMARY OF THE INVENTION]

The present invention proposes an electronic terminal device attached to a two-wheeled vehicle, which can collect and store signal violation history information , intrusion history information in prohibited areas, and speed violation history information of the driver of the two-wheeled vehicle, and store them in a database, so that the user can use this history information based on As a result, it is intended to assist drivers of two-wheeled vehicles to more easily determine whether they are driving in compliance with the law.

GPS ( Global Positioning System ) for location tracking according to an embodiment of the present invention and forward An electronic terminal device that can be attached to a two-wheeled vehicle equipped with a camera for shooting is exist A plurality of pre -designated branches A location information storage unit in which traffic light location information is stored, a map data storage unit in which map data in which information on two-wheeled vehicle passable sections and speed limits for each road are specified is stored, and based on the GPS , By tracking the current location information of the two-wheeled vehicle , the two-wheeled vehicle, plural of _ of any one of the traffic light location information A signal violation determination event generation unit generating a signal violation determination event for determining whether the two-wheeled vehicle violates a signal whenever it is determined that the two-wheeled vehicle enters an area within a preset radius centered on the traffic light location information, the signal violation determination When an event occurs, a front image is obtained by photographing the front through the camera , and then a traffic light area is detected from the front image based on a pre-designated object detection model for detecting the traffic light area. A signal confirmation unit that checks whether the traffic light signal is a stop signal through pixel value analysis , and if it is confirmed that the traffic light signal is a stop signal, based on the GPS, whether or not the two-wheeled vehicle is moving, the two-wheeled vehicle is moving If it is confirmed that the two-wheeled vehicle is in violation of the signal, after determining that the two-wheeled vehicle violates the signal, a server for storing the previously specified signal violation history by generating signal violation history information consisting of date and time information for the time when the two-wheeled vehicle is determined to have violated the signal a signal violation history information storage unit stored in, an intrusion determination event generating unit generating a no-traffic section intrusion determination event for determining whether the two-wheeled vehicle is trespassing into the no-go section at a first predetermined time interval, and the no-traffic section When a section intrusion determination event occurs, based on the GPS , By tracking the current location information of the two-wheeled vehicle and simultaneously loading the map data stored in the map data storage unit, the current location of the two-wheeled vehicle is A two-wheeled vehicle confirmation unit for checking whether or not it belongs to the two-wheeled vehicle passable section on a map, the current location of the two-wheeled vehicle, If it is confirmed that the two-wheeled vehicle does not belong to the passable section on the map, it is determined that the two-wheeled vehicle has entered the prohibited section, and then the date and time information for the time when the two-wheeled vehicle is determined to have entered the prohibited section An intrusion history information storage unit that generates and stores intrusion history information in the configured traffic prohibited section in a pre-specified intrusion history storage server, and generates a speed violation determination event to determine whether the two-wheeled vehicle is speeding at a preset second time interval. A speed violation determination event generating unit, when the speed violation determination event occurs, based on the GPS , The current location information of the two-wheeled vehicle is tracked and the map data stored in the map data storage unit is loaded at the same time, the speed limit specified on the road according to the current location of the two-wheeled vehicle is checked on the map, and the GPS Based on this, a speed confirmation unit for measuring the moving speed of the two-wheeled vehicle and checking whether the moving speed exceeds the limit speed, and when it is confirmed that the moving speed exceeds the limit speed, the two-wheeled vehicle sets the speed. After it is determined that the two-wheeled vehicle has violated the speed, a speed violation history information storage unit for generating and storing speed violation history information consisting of date and time information for a time point at which it is determined that the two-wheeled vehicle violated the speed is stored in a pre-specified speed violation history storage server.

The present invention proposes an electronic terminal device attached to a two-wheeled vehicle, which can collect and store signal violation history information , intrusion history information in prohibited areas, and speed violation history information of the driver of the two-wheeled vehicle, and store them in a database, so that the user can use this history information based on As a result, it is possible to support the two-wheeled vehicle driver to more easily determine whether or not he or she is driving in compliance with the law.

[BRIEF DESCRIPTION OF THE DRAWINGS]

FIG. 1 is a diagram showing the structure of an electronic terminal device according to an embodiment of the present invention.

FIG. 2 and 3 are diagrams for explaining the operation of an electronic terminal device according to an embodiment of the present invention.

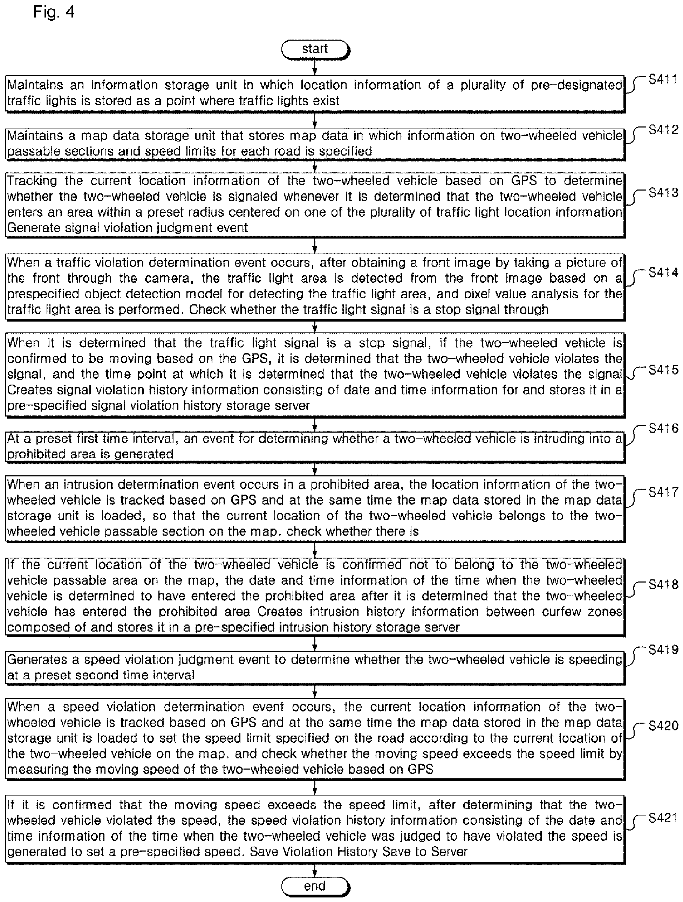

FIG. 4 is a flowchart illustrating an operating method of an electronic terminal device according to an embodiment of the present invention.

[DETAILED DESCRIPTION]

Hereinafter, embodiments according to the present invention will be described in detail with reference to the accompanying drawings. This description is not intended to limit the present invention to specific embodiments, but should be understood to include all modifications, equivalents, and substitutes included in the spirit and scope of the present invention. While describing each drawing, similar reference numerals have been used for similar components, and unless otherwise defined, all terms used in this specification, including technical or scientific terms, are common knowledge in the art to which the present invention belongs . has the same meaning as commonly understood by the person who has it.

this document, when a certain component is said to "include", it means that it may further include other components without excluding other components unless otherwise stated. In addition, in various embodiments of the present invention, each component, functional block, or means may be composed of one or more sub-components, and the electrical, electronic, and mechanical functions performed by each component are electronic It may be implemented with various known elements or mechanical elements such as circuits, integrated circuits, ASICs (Application Specific Integrated Circuits), and may be implemented separately or two or more may be integrated into one.

On the other hand , the blocks of the attached block diagram or the steps of the flowchart are computer program instructions (instructions ) can be interpreted as meaning. Since these computer program instructions may be stored in a memory included in a computer device or in a computer readable memory, the functions described in blocks of a block diagram or steps of a flowchart are produced as a product containing instruction means for performing them. It could be. Further, each block or each step may represent a module, segment or portion of code that includes one or more executable instructions for executing specified logical function(s). Also, it should be noted that in some alternative embodiments, functions mentioned in blocks or steps may be executed out of a predetermined order. For example, two blocks or steps shown in succession may be performed substantially simultaneously or in reverse order, and in some cases, some blocks or steps may be omitted.

1 is a diagram showing the structure of an electronic terminal device according to an embodiment of the present invention.

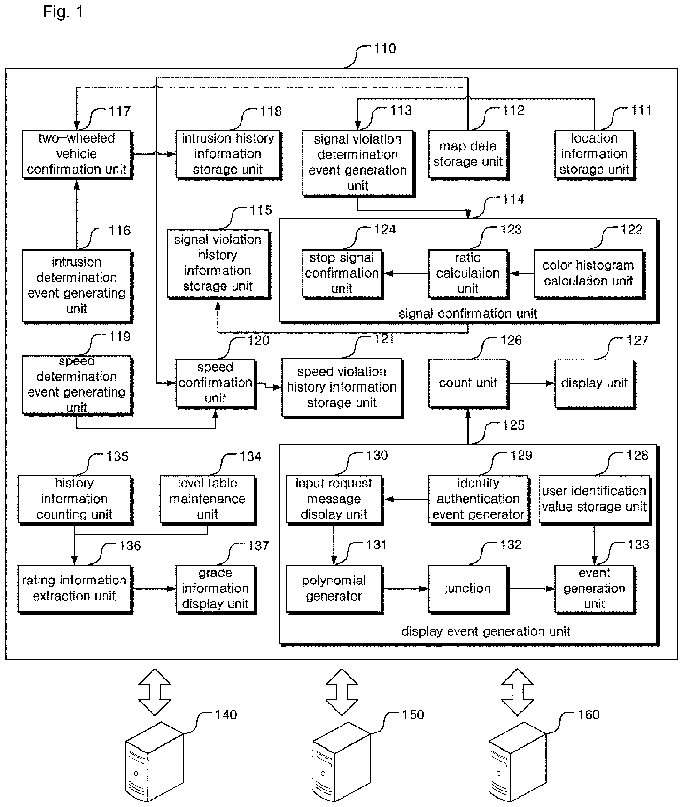

Referring to FIG. 1, the electronic terminal device 110 according to the present invention includes a global positioning system (GPS ) for location tracking and a front A terminal device attachable to a two-wheeled vehicle equipped with a camera for photographing, comprising a location information storage unit 111, a map data storage unit 112, a signal violation determination event generator 113, a signal confirmation unit 114, a signal Violation history information storage unit 115, intrusion determination event generation unit 116, two-wheeled vehicle confirmation unit 117, intrusion history information storage unit 118, speed violation determination event generation unit 119, speed confirmation unit 120 and a speed violation history information storage unit 121 .

The location information storage unit 111 has a traffic light exist A plurality of pre - designated branches Traffic light location information is stored.

For example, a traffic light exist If it is assumed that the points are 'point 1, point 2, point 3, ...', information as shown in Table 1 below may be stored in the location information storage unit 111.

[Table 1]

| Where a traffic light exists | Multiple traffic light location information |
|---|---|
| Branch 1 | Traffic light location information 1 (latitude $_{P1}$, longitude $_{P1}$ ) |
| branch 2 | Traffic light location information 2 (latitude $_{P2}$, longitude $_{P2}$ ) |
| Branch 3 | Traffic light location information 3 (latitude $_{P3}$, longitude $_{P3}$ ) |
| ... | ... |

The map data storage unit 112 stores map data in which information about a two-wheeled vehicle passable section and a speed limit for each road is specified.

For example, information as shown in Table 2 below may be specified in the map data.

[Table 2]

| Information on areas where two-wheeled vehicles are allowed | Information on speed limits by road | |
|---|---|---|
| section 1 | road 1 | 45km/h |
| section 2 | road 2 | 40km/h |
| section 3 | road 3 | 35km/h |
| ... | ... | ... |

The signal violation determination event generating unit 113 based on the GPS , By tracking the current location information of the two-wheeled vehicle, the two-wheeled vehicle, plural of _ of any one of the traffic light location information Whenever it is determined that the vehicle enters an area within a preset radius centered on the traffic light location information , a signal violation determination event is generated to determine whether the two-wheeled vehicle violates the signal. In this regard, since the electronic terminal device 110 of the present invention is a device attached to the two-wheeled vehicle, the result of performing location tracking based on the GPS mounted on the electronic terminal device 110 is, It can be regarded as a location tracking result.

When the signal violation determination event occurs, the signal confirmation unit 114 acquires a forward image by photographing the front through the camera , and then, based on a pre-designated object detection model for detecting a traffic light area, from the forward image A traffic light area is detected, and whether the traffic light signal is a stop signal is checked through pixel value analysis of the traffic light area . Here, the object detection model is a pre-learned artificial intelligence-based model for detecting an object having a shape matching a traffic light area from an image, and a You Only Look Once (YOLO)-based object detection model may be utilized.

At this time, according to an embodiment of the present invention, the signal checker 114 may include a color histogram calculator 122, a ratio calculator 123, and a stop signal checker 124 .

When the traffic light area is detected, the color histogram calculator 122 calculates a color histogram from the traffic light area.

When the color histogram is calculated, the ratio calculating unit 123 calculates an existence ratio of the number of pixels belonging to a predetermined pixel value range , based on the total number of pixels, for each RGB color channel in the color histogram.

The stop signal check unit 124 calculates the abundance ratio calculated for the red color channel , the calculated abundance ratio for the green color channel , and the calculated abundance ratio for the blue color channel . As a result of the check, if it is confirmed that the abundance ratio calculated for the red color channel exceeds both the abundance ratio calculated for the green color channel and the abundance ratio calculated for the blue color channel , the traffic light Check that the signal is a stop signal ; if not, the traffic light signal is not a stop signal Check.

When it is confirmed that the traffic light signal is a stop signal, the signal violation history information storage unit 115 checks whether the two-wheeled vehicle is moving based on the GPS, and when it is confirmed that the two-wheeled vehicle is moving, the two-wheeled vehicle is After it is determined that the two-wheeled vehicle violated the signal, signal violation history information consisting of date and time information for the time point at which it is determined that the two-wheeled vehicle violated the signal is generated and stored in the predetermined signal violation history storage server 140 .

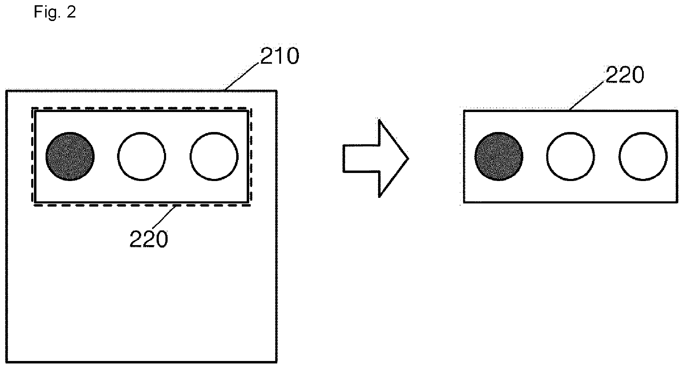

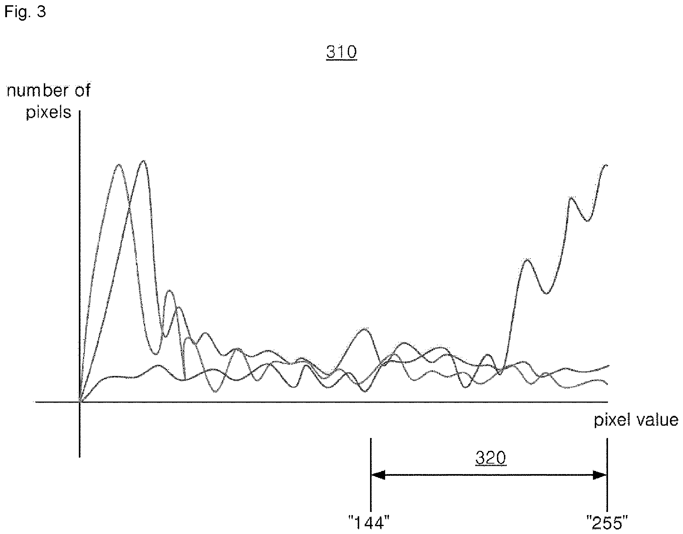

Hereinafter, with reference to FIGS. 2 and 3, operations of the signal violation determination event generator 113, the signal checker 114, and the signal violation history information storage unit 115 will be described in detail, for example..

First, at a specific point in time 'June 8, 2023 at 17:29', the signal violation determination event generating unit 113 based on the GPS , As a result of tracking the current location information of the two-wheeled vehicle , the two-wheeled vehicle, The plurality of locations stored in the location information storage unit 111 as shown in Table 1 above. Any one of the traffic light location information 'traffic light location information 1 (latitude $_{P1}$, longitude $_{P1}$ ), traffic light location information 2 (latitude $_{P2}$, longitude $_{P2}$), traffic light location information 3 (latitude $_{P3}$, longitude $_{P3}$), ...' Suppose that it is determined that the traffic light location information 'traffic light location information 1 (latitude $_{P1}$, longitude $_{P1}$ )' is entering an area within a preset radius .

Then, the signal violation determination event generating unit 113 may generate a signal violation determination event for determining whether the two-wheeled vehicle violates the signal.

In this way, when the signal violation determination event is generated by the signal violation determination event generating unit 113, the signal confirmation unit 114 acquires the front image 210 by photographing the front through the camera , and then detects the object Based on the model, it is possible to detect a traffic light area 220 as shown in the figure shown at reference numeral 220 from the front image 210 .

In this way, when the traffic light area 220 is detected by the signal confirmation unit 114, the color histogram calculation unit 122 included in the signal confirmation unit 114 calculates from the traffic light area 220, reference numeral 310 in FIG. A color histogram 310 as shown in the figure may be calculated.

may calculate the existence ratio of the number of pixels belonging to the pre- specified pixel value range 320 based on the total number of pixels for each RGB color channel in the color histogram 310.. At this time, when the pre-specified pixel value range 320 is "144 to 255" as shown in FIG. Based on the number of pixels, the existence ratio of the number of pixels belonging to the pre-specified pixel value range 320 of "144 to 255" can be calculated.

the ratio of the number of pixels belonging to the pixel value range 320 based on the total number of pixels for the red color channel will be described in detail. First, assuming that the total number of pixels is '10000' and the number of pixels belonging to the pixel value range 320 is '7140', the ratio calculator 123 calculates the total number of pixels for the red color channel . Based on '10000', which is '10000', the existence ratio of '7140', which is the number of pixels belonging to the pixel value range 320, can be calculated as '0.714'.

the ratio of the number of pixels belonging to the pixel value range 320 based on the total number of pixels for the green color channel will be described in detail. First, assuming that the total number of pixels is '10000' and the number of pixels belonging to the pixel value range 320 is '3710', the ratio calculator 123 calculates the total number of pixels for the Green color channel. Based on '10000', the existence ratio of '3710', which is the number of pixels belonging to the pixel value range 320, can be calculated as '0.371'.

details of how the ratio calculation unit 123 calculates the ratio of the number of pixels belonging to the pixel value range 320 based on the total number of pixels for the blue color channel will be described in detail. First, assuming that the total number of pixels is '10000' and the number of pixels belonging to the pixel value range 320 is '2850', the ratio calculator 123 calculates the total number of pixels for the Blue color channel. Based on '10000', the existence ratio of '2850', which is the number of pixels belonging to the pixel value range 320, can be calculated as '0.285'.

Then, the stop signal confirmation unit 124 calculates the abundance ratio '0.714' for the Red color channel , the abundance ratio ' 0.371' calculated for the Green color channel and the abundance ratio calculated for the Blue color channel. '0.285' You can check if all of them are exceeded .

At this time, as a result of the check by the stop signal confirmation unit 124, '0.714', the calculated abundance ratio for the red color channel, is '0.371', the calculated abundance ratio for the green color channel. and '0.285', the calculated abundance ratio for the Blue color channel . Since it is confirmed that all of them are exceeded , the stop signal checking unit 124 can confirm that the traffic light signal is a stop signal.

In this way, when it is confirmed that the traffic light signal is a stop signal by the stop signal checking unit 124, the signal violation history information storage unit 115 checks whether the two-wheeled vehicle is moving based on the GPS, and the two - wheeled vehicle When it is confirmed that the two-wheeled vehicle is moving, it may be determined that the two-wheeled vehicle violates the signal.

Thereafter, the signal violation history information storage unit 115 may generate signal violation history information composed of date and time information for a time point at which it is determined that the two-wheeled vehicle violated the signal.

If the time point at which it is determined that the two-wheeled vehicle violated the signal is 'June 8, 2023 at 17:30', the signal violation history information storage unit 115 determines that the two-wheeled vehicle violated the signal 'Signal violation history information 12' composed of 'June 8, 2023' as date information and '17:30' as time information can be generated.

Then, the signal violation history information storage unit 115 may store 'signal violation history information 12' in a pre-designated signal violation history storage server 140 as shown in Table 3 below.

[Table 3]

| Signal Violation History Information |
| --- |
| ... |
| Signal violation history information 8 (Date information: March 8, 2021, time information: 19:55) |
| Signal Violation History Information 9 (Date information: November 11, 2021, Time information: 18:30) |
| Signal Violation History Information 10 (Date information: May 8, 2022, time information: 17:30) |
| Signal Violation History Information 11 (Date information: December 23, 2022, time information: 19:23) |
| Signal Violation History Information 12 (Date information: June 8, 2023, time information: 17:30) |

The trespassing determination event generation unit 116 generates a trespassing zone trespassing determination event for determining whether the two-wheeled vehicle trespasses into the prohibited zone at a predetermined first time interval.

When the two-wheeled vehicle confirmation unit 117 occurs, the intrusion determination event occurs, based on the GPS , By tracking the current location information of the two-wheeled vehicle and loading the map data stored in the map data storage unit 112, the current location of the two-wheeled vehicle is It is checked on the map whether it belongs to the two-wheeled vehicle passable section.

The intrusion history information storage unit 118 stores the current location of the two-wheeled vehicle, If it is confirmed that the two-wheeled vehicle does not belong to the passable section on the map, it is determined that the two-wheeled vehicle has entered the prohibited section, and then the date and time information for the time when the two-wheeled vehicle is determined to have entered the prohibited section The configured traffic prohibition section intrusion history information is generated and stored in the pre-designated intrusion history storage server 150 .

Hereinafter, the operations of the intrusion determination event generation unit 116, the two-wheeled vehicle confirmation unit 117, and the intrusion history information storage unit 118 will be described in detail by way of example. determines whether the two-wheeled vehicle is trespassing into the prohibited section at intervals of '3 minutes', which is the first preset time. In order to do so, an intrusion determination event may be generated in the prohibited section.

At this time, if the intrusion determination event generation unit 116 determines that the no-traffic section intrusion determination event has occurred at 'June 8, 2023 at 17:40', the two-wheeled vehicle confirmation unit 117 determines based on the GPS , By tracking the current location information of the two-wheeled vehicle and loading the map data stored in the map data storage 112 as shown in Table 2 above, the current location of the two-wheeled vehicle is On the map, it is possible to check whether or not the two-wheeled vehicle belongs to 'section 1, section 2, section 3, ...', which is the passable section of the two-wheeled vehicle.

At this time, as a result of checking by the two-wheeled vehicle confirmation unit 117, the current position of the two-wheeled vehicle is If it is confirmed on the map that it does not belong to the 'section 1, section 2, section 3, ...', which is the passable section for the two-wheeled vehicle, the intrusion history information storage unit 118 determines whether the two-wheeled vehicle has invaded the passage prohibited section. can be judged to be

Thereafter, the trespassing history information storage unit 118 may generate intrusion history information of a prohibited zone including date and time information for a point in time when it is determined that the two-wheeled vehicle entered the prohibited zone.

If the point at which it is determined that the two-wheeled vehicle intruded into the prohibited area is 'June 8, 2023 at 17:41', the intrusion history information storage unit 118 determines that the two-wheeled vehicle has entered the prohibited area 'Jun.

Then, the intrusion history information storage unit 118 may store 'traffic section intrusion history information 1 5' in the pre-designated intrusion history storage server 150 as shown in Table 4 below.

[Table 4]

| Intrusion history information of prohibited areas |
|---|
| ... |
| Intrusion History Information 11 (Date information: April 11, 2022, time information: 18:55) |
| Intrusion History Information 12 |
| (Date information: October 27, 2022, time information: 18:28) |
| Intrusion History Information 13 (Date information: February 4, 2023, time information: 9:30) |
| Intrusion History Information 14 (Date information: May 5, 2023, time information: 18:44) |
| Intrusion History Information 15 (Date information: June 8, 2023, time information: 17:41) |

The speed violation determination event generation unit 119 generates a speed violation determination event for determining whether the two-wheeled vehicle is speeding at a preset second time interval.

When the speed violation determination event occurs, the speed check unit 120 based on the GPS , The current location information of the two-wheeled vehicle is tracked and the map data stored in the map data storage unit 112 is loaded, and the speed limit specified on the road according to the current location of the two-wheeled vehicle is checked on the map, and the Based on the GPS, the moving speed of the two-wheeled vehicle is measured to determine whether the moving speed exceeds the limit speed.

When the speed violation history information storage unit 121 determines that the two-wheeled vehicle violates the speed when it is confirmed that the moving speed exceeds the limit speed, the date for the time point at which it is determined that the two-wheeled vehicle violates the speed And speed violation history information consisting of time information is generated and stored in a pre-designated speed violation history storage server 160 .

Hereinafter, operations of the speed determination event generator 119, the speed checker 120, and the speed violation history information storage unit 121 will be described in detail, for example.

First, when the preset second time period is set to '5 minutes', the speed determination event generating unit 119 performs a speed violation for determining whether the two-wheeled vehicle is speeding at intervals of '5 minutes', which is the second preset time period. A decision event can be triggered.

At this time, when it is determined that the speed violation determination event has occurred at '17:46 on June 8, 2023' by the speed determination event generator 119, the speed determination unit 120 based on the GPS , At the same time as tracking the current location information of the two-wheeled vehicle, the map data stored in the map data storage unit 112 as shown in Table 2 is loaded, and the speed limit specified on the road according to the current location of the two-wheeled vehicle is loaded on the map. can be checked.

If, on the map, the road corresponding to the current location of the two-wheeled vehicle is referred to as 'Road 3', the speed check unit 120 limits the road designated for 'Road 3', which is the road according to the current location of the two-wheeled vehicle, on the map. You can check the speed '35km/h'.

Then, the speed checking unit 120 may measure the moving speed of the two-wheeled vehicle based on the GPS and check whether the moving speed exceeds the speed limit '35 km/h'.

At this time, as a result of the check by the speed checking unit 120, if it is confirmed that the moving speed exceeds the speed limit '35 km/h', the speed violation history information storage unit 121 determines that the two-wheeled vehicle violates the speed . can be judged to have been

Thereafter, the speed violation history information storage unit 121 may generate speed violation history information composed of date and time information for a point in time at which it is determined that the two-wheeled vehicle violated the speed.

Here, when the time point at which it is determined that the two-wheeled vehicle violated the speed is 'June 8, 2023 at 17:47', the speed violation history information storage unit 121 determines that the two-wheeled vehicle has violated the speed. 'Speed violation history information 10' composed of 'June 8, 2023' as date information and '17:47' as time information can be created.

Then, the speed violation history information storage unit 121 may store 'speed violation history information 10' in the pre-designated speed violation history storage server 160 as shown in Table 5 below.

[Table 5]

| Speed Violation History Information |
|---|
| ... |
| Speed Violation History Information 6 (Date information: February 13, 2021, time information: 10:10) |
| Speed Violation History Information 7 (Date information: October 1, 2021, time information: 18:15) |
| Speed Violation History Information 8 (Date information: June 19, 2022, time information: 13:22) |
| Speed Violation History Information 9 (Date information: November 11, 2022, Time information: 19:03) |
| Speed Violation History Information 10 (Date information: June 8, 2023, time information: 17:47) |

the present invention, the electronic terminal device 110 may further include a display event generator 125, a count unit 126, and a display unit 127.

The display event generator 125 From the user of the electronic terminal device, When a display command for the traffic law violation history information for the first period specified by the user is applied, a traffic law violation history information display event for displaying the traffic law violation history information for the first period is generated.

The count unit 126 accesses the traffic violation history storage server 140 when the traffic law violation history information display event i occurs , and calculates the number of signal violation history information composed of the date and time information belonging to the first period . Count 1 number, access the intrusion history storage server 150, count the second number, which is the number of intrusion history information in the prohibited section consisting of the date and time information belonging to the first period, and speed violation history storage server 160 is accessed, and a third number, which is the number of speed violation history information composed of date and time information belonging to the first period, is counted.

first number, the second number, and the third number are counted, the display unit 127 displays information about the first number , information about the second number, and information about the third number to the first number. during the period of It is displayed on the screen as traffic law violation history information.

Hereinafter, operations of the display event generation unit 125, the count unit 126, and the display unit 118 will be described in detail by way of example.

First, the first period designated by the user is 'May 1, 2022 to June 8, 2023', and from the user of the electronic terminal device, Assume that a display order for traffic law violation history information for the first period of 'May 1, 2022 to June 8, 2023' is authorized .

Then , the display event generator 125 the first period A traffic law violation history information display event can be generated to display traffic law violation history information from 'May 1, 2022 to June 8, 2023' .

event is generated by the display event generation unit 125 , the count unit 126 accesses the signal violation history storage server 140 in which the information shown in Table 3 is stored, and , The first number, which is the number of signal violation history information composed of date and time information belonging to the first period of 'May 1, 2022 to June 8, 2023', can be counted as '3', Access to the intrusion history storage server 150 in which the information shown in Table 4 is stored, and travel composed of date and time information belonging to the first period 'May 1, 2022 to June 8, 2023' The second number, which is the number of forbidden section intrusion history information, can be counted as '4', and by accessing the speed violation history storage server 160 in which information such as 5 is stored, the first period of '2022 The third number, which is the number of speed violation history information composed of date and time information belonging to 'May 1, 2023 to June 8, 2023', may be counted as '3'.

In this way, when the first number , the second number, and the third number are counted by the counting unit 126, the display unit 127 displays information on the first number '3' and the second number Information on 'four' and information on the third number of 'three' during the first period of 'May 1, 2022 to June 8, 2023' It can be displayed on the screen as traffic law violation history information .

Through this, the user, from 'May 1, 2022 to June 8, 2023' Traffic law violation history information can be more easily grasped.

At this time, according to an embodiment of the present invention, the display event generator 125 includes a user identification value storage unit 128, a user authentication event generator 129, an input request message display unit 130, and a polynomial generator 131 ), a connection unit 132 and an event generation processing unit 133.

The user identification value storage unit 128 stores a pre-issued user identification value for the user.

is a derivative of an n-1 order polynomial having as a coefficient the number of each digit constituting the main password of n (n is a natural number of 3 or more) previously issued to the user. In, k (k is a natural number greater than or equal to 2) digits pre-issued for the user It is a value calculated by sequentially concatenating k differential coefficients generated by inputting each digit constituting the auxiliary password .

For example, let 'n = 3', 'k = 2 ', the pre-issued 3-digit primary password for the user is '123', and the pre-issued 2-digit secondary password for the user is '85'. ' Let's assume.

$^2 +2x$ ' is a quadratic polynomial having '1', '2', and '3', each digit constituting '123', a 3-digit main password issued to the user in advance, as a coefficient. To '2x+2', which is the derivative of +3', '8' and '5', which are each digit constituting '85', a 2-digit secondary password previously issued to the user, are applied as input Assuming that the two generated differential coefficients '18 and 12' are sequentially concatenated and the calculated value is '1812', information may be stored in the user identification value storage unit 128 as shown in 6 below . there is.

[Table 6]

| A pre-issued user identification value for the user |
| --- |
| 1812 |

The identity authentication event generating unit 129 from the user, When a command to display traffic law violation history information for the first period is applied, an identity authentication event for performing identity authentication for the user is generated.

When the user authentication event occurs, the input request message display unit 130 generates an input request message requesting the user to input an n-digit primary password and a k-digit secondary password issued to the user in advance, and displays the screen displayed on the

The polynomial generation unit 131, when an n-digit first main password and a k-digit first auxiliary password are input from the user in response to the input request message, determines the number of digits constituting the first main password. Creates an n-1 order polynomial with numbers as coefficients .

When the n-1 order polynomial is generated, the concatenation unit 132 generates a derivative of the n-1 order polynomial, and then applies the number of each digit constituting the first auxiliary password to the derivative as an input. By doing so, k first differential coefficients are generated, and a first concatenated value is generated by concatenating the k first differential coefficients.

the event generation processing unit 133 checks whether the user identification value stored in the user identification value storage unit 128 is the same as the first concatenated value, and if it is confirmed, the After processing that the authentication of the user has been completed, the traffic law violation history information display event is generated.

Hereinafter, operations of the identity authentication event generation unit 129, the input request message display unit 130, the polynomial generation unit 131, the connection unit 132, and the event generation processing unit 133 will be described in detail, for example, do.

First, 'n = 3 ', 'k = 2 ', and from the user, Assume that a display order for traffic law violation history information for the first period of 'May 1, 2022 to June 8, 2023' is authorized .

Then, the identity authentication event generation unit 129 may generate a identity authentication event for performing identity authentication for the user.

In this way, when the identity authentication event is generated by the identity authentication event generating unit 129, the input request message display unit 130 provides the user with a 3-digit main password and a 2-digit secondary password previously issued to the user. An input request message requesting input of a password may be generated and displayed on the screen.

At this time, when a 3-digit first main password such as '123' and a 2-digit first auxiliary password such as '85' are input from the user in response to the input request message, the polynomial generator 131 Can generate a second-order polynomial with coefficients '1', '2', and '3', each digit constituting '123', the first main password, as 'x $^2$ +2x + 3 ' there is.

In this way , when the second-order polynomial is generated by the polynomial generation unit 131, the concatenation unit 132 generates a derivative of the second-order polynomial 'x $^2$ +2x + 3' as '2x + 2'. Then, by applying '8' and '5', which are the digits constituting the first auxiliary password, '85', to the derivative '2x+2' as inputs, the two first differential coefficients' 18 and 12' can be generated, and a first concatenated value such as '1812' can be generated by concatenating the two first differential coefficients '18 and 12'.

In this way, when the first concatenation value is generated by the concatenation unit 132, the event generation processing unit 133 converts the user identification value '1812' stored in the user identification value storage unit 128 as shown in Table 6 into It can be checked whether it is the same as '1812', which is the first concatenated value.

At this time, as a result of the confirmation by the event generation processing unit 133, since both values are confirmed to be the same, the event generation processing unit 133 processes the user as having completed identity authentication, and then sends the traffic law violation history information display event. can cause

According to one embodiment of the present invention, the electronic terminal device 110 may further include a grade table maintenance unit 134, a history information counting unit 135, a rating extraction unit 136, and a rating information display unit 137. there is.

The grade table maintenance unit 134 stores and maintains a grade table in which a plurality of pre - designated grades representing law-abiding driving levels and range values of a preset driving index corresponding to each of the plurality of grades are recorded..

For example, the grade table maintenance unit 134 may store and maintain a grade table such as Table 7 below.

[Table 7]

| multiple grades | range value of driving index |
|---|---|
| 1 star (very good) | greater than 0 and less than 25 |
| Grade 2 (Good) | 25 or more and less than 50 |
| Grade 3 (Average) | 50 or more and less than 75 |
| Grade 4 (Poor) | 75 or more and less than 100 |
| 5 stars (very bad) | over 100 |

command to display grade information on the law-abiding driving level of the user is applied from the user, the history information counting unit 135 accesses the signal violation history storage server 140 and displays the current time point at which the command to display grade information was applied . based on , Counting the fourth number, which is the number of signal violation history information composed of date and time information belonging to the second period in the past, corresponding to the previous preset period, and accessing the intrusion history storage server 150, the second period Counts the fifth number, which is the number of intrusion history information in the prohibited section consisting of date and time information belonging to the speed violation consisting of the date and time information belonging to the second period A sixth number, which is the number of history information, is counted.

When the fourth number, the fifth number, and the sixth number are counted, the rating extractor 136 applies different preset weights to the fourth number, the fifth number, and the sixth number. Then, a three-dimensional vector having the weighted fourth, fifth , and sixth numbers as components is generated, and the Manhattan norm of the vector is used as a first driving index for the user. After the calculation, the first grade recorded in correspondence with the range value to which the first driving index belongs is extracted from the grade table.

Here , the Manhattan norm is the L1 norm representing the size of a vector or matrix, and the following equation 1 can be computed.

[Equation 1]

$$\| X \|_1 = \sum_{i=1}^{n} |x_i|$$

In $\|X\|_1$ Equation 1 above , It means the Manhattan norm , and $x_i$ means the i-th element included in a vector or matrix .

When the first grade is extracted, the grade information display unit 137 displays information on the first grade on the screen.

Hereinafter, operations of the history information counting unit 135, the rating extracting unit 136, and the rating information display unit 137 will be described in detail, for example.

it is assumed that a command to display grade information on the law-abiding driving level of the user is authorized by the user.

Then , the history information counting unit 135 accesses the signal violation history storage server 140 in which the information shown in Table 3 is stored , and based on the current time point at which the level information display command is applied , A fourth number, which is the number of pieces of signal violation history information composed of date and time information belonging to a second period in the past, prior to a preset period, may be counted.

Here, when the current point in time at which the rating information display command is applied is '22:10 on June 8, 2023' and the preset period is '158 days', the history information counting unit 135 calculates the By accessing the signal violation history storage server 140 where information such as 3 is stored , based on 'June 8, 2023 22:10', the current point in time when the rating information display command is authorized , The number of signal violation history information consisting of date and time information belonging to the second period of the past, 'January 1, 2023 to June 8, 2023', corresponding to the preset period '158 days'. The number of 4 can be counted as '1'.

In addition, the history information counting unit 135 accesses the intrusion history storage server 150 in which the information shown in Table 4 is stored, and records the second period from January 1, 2023 to June 8, 2023. The fifth number, which is the number of intrusion history information in the prohibited section consisting of the date and time information belonging to ', can be counted as '3', and the information shown in Table 5 is stored Speed violation history storage server 160 and counting the sixth number, which is the number of speed violation history information composed of date and time information belonging to the second period 'January 1, 2023 to June 8, 2023', as '1'. can

In this way, when the fourth number, the fifth number, and the sixth number are counted by the history information counting unit 135 , the rating extraction unit 136 calculates the fourth number'1' and the fifth number Different preset weights may be applied to '3' and '1' , which is the sixth number.

If it is assumed that the preset different weights are '15', '10', and '15', respectively, the rating extraction unit 136 selects the fourth number of '1' and the fifth number of '3' . ' , different preset weights '15', '10', and '15' may be applied to the sixth number of '1' .

After that, the rating extractor 136 converts a three-dimensional vector having the weighted fourth number '15', the fifth number '30', and the sixth number '15' as components to '[ 15 30 15]' , the Manhattan norm of the vector is calculated as '60' according to Equation 1, and then '60', the Manhattan norm of the vector, is the first driving for the user. It can be calculated as an index .

Then, the grade extraction unit 136 corresponds to the range value of '50 or more and less than 75' to which the first driving index '60' belongs, from the grade table shown in Table 7, and '3 grade ( Normal)' may be extracted as a first level, which is a level representing the user's law-abiding driving level .

In this way, when the first grade is extracted by the grade extraction unit 136, the grade information display unit 137 may display information on the first grade, '3rd grade (normal)', on the screen.

Through this, the user can confirm that the level according to his law-abiding driving level is 'Grade 3 (normal)'.

4 is a GPS and forward for location tracking according to an embodiment of the present invention This is a flowchart illustrating an operating method of an electronic terminal device attachable to a two-wheeled vehicle equipped with a camera for taking pictures .

step (S41 1 ), the traffic light exist A plurality of pre -designated branches A location information storage unit in which traffic light location information is stored is maintained.

step (S41 2 ), a map data storage unit in which map data in which information on the passable section of a two-wheeled vehicle and the speed limit for each road is designated is stored is maintained.

step (S41 3 ), based on the GPS , By tracking the current location information of the two-wheeled vehicle , the two-wheeled vehicle, plural of _ of any one of the traffic light location information Whenever it is determined that the vehicle enters an area within a preset radius centered on the traffic light location information , a signal violation determination event is generated to determine whether the two-wheeled vehicle violates the signal.

step (S414 ), when the signal violation determination event occurs, a forward image is obtained by photographing the front through the camera , and then, based on a prespecified object detection model for detecting a traffic light area, from the forward image A traffic light area is detected, and whether the traffic light signal is a stop signal is checked through pixel value analysis of the traffic light area .

step (S415 ), if it is confirmed that the traffic light signal is a stop signal, based on the GPS, whether or not the two-wheeled vehicle is moving is checked, and if it is confirmed that the two-wheeled vehicle is moving, the two-wheeled vehicle violates the signal After determining that the two-wheeled vehicle violated the signal, signal violation history information consisting of date and time information for the time point at which it was determined that the two-wheeled vehicle violated the signal is generated and stored in a pre-specified signal violation history storage server.

In step S41 6 , a prohibited section intrusion determination event for determining whether the two-wheeled vehicle has entered the prohibited section is generated at a first preset time interval.

step (S41 7 ), when the no-traffic section intrusion determination event occurs, based on the GPS , By tracking the current location information of the two-wheeled vehicle and simultaneously loading the map data stored in the map data storage unit, the current location of the two-wheeled vehicle is It is checked on the map whether it belongs to the two-wheeled vehicle passable section.

step (S41 8 ), the current position of the two-wheeled vehicle, If it is confirmed that the two-wheeled vehicle does not belong to the passable section on the map, it is determined that the two-wheeled vehicle has entered the prohibited section, and then the date and time information for the time when the two-wheeled vehicle is determined to have entered the prohibited section Intrusion history information of the configured traffic prohibition section is created and stored in a pre-specified intrusion history storage server.

step (S419 ), a speed violation determination event for determining whether or not the two-wheeled vehicle is speeding is generated at a preset second time interval.

step (S4 20 ), when the speed violation determination event occurs, based on the GPS , The current location information of the two-wheeled vehicle is tracked and the map data stored in the map data storage unit is loaded at the same time, the speed limit specified on the road according to the current location of the two-wheeled vehicle is checked on the map, and the GPS As a basis, a moving speed of the two-wheeled vehicle is measured, and whether the traveling speed exceeds the limit speed is checked.

step (S4 21 ), if it is confirmed that the moving speed exceeds the limit speed, after determining that the two-wheeled vehicle violates the speed, date and time information for the time when it is determined that the two-wheeled vehicle violates the speed Speed violation history information consisting of is generated and stored in a pre-specified speed violation history storage server.

At this time, according to one embodiment of the present invention, in step (S4 14 ), if the traffic light area is detected, calculating a color histogram from the traffic light area, and if the color histogram is calculated, in the color histogram, RGB color Calculating the abundance ratio of pixels belonging to a pre-specified pixel value range on the basis of the total number of pixels for each channel, and the calculated abundance ratio for the Red color channel , the calculated abundance ratio for the Green color channel , and the Blue color channel The abundance ratio calculated for the color channel is As a result of the check, if it is confirmed that the abundance ratio calculated for the red color channel exceeds both the abundance ratio calculated for the green color channel and the abundance ratio calculated for the blue color channel , the traffic light Check that the signal is a stop signal ; if not, the traffic light signal is not a stop signal Checking steps may be included.

In addition, according to an embodiment of the present invention, the operating method of the electronic terminal device from the user of the electronic terminal device, Generating a traffic law violation history information display event for displaying traffic law violation history information during the first period when a display command for traffic law violation history information for a first period designated by the user is applied; When the traffic law violation history information display event occurs , accesses to the signal violation history storage server , counts a first number, which is the number of signal violation history information composed of date and time information belonging to the first period , and Accessing the history storage server, counting the second number, that is, the number of intrusion history information in the prohibited section composed of date and time information belonging to the first period, accessing the speed violation history storage server, in the first period Counting a third number, which is the number of speed violation history information composed of date and time information to which it belongs, and when the first number, the second number, and the third number are counted, the information on the first number and the third number The information on the two numbers and the information on the third number during the first period The method may further include displaying on a screen as traffic law violation history information.

At this time, according to one embodiment of the present invention, the generating step is a pre-issued user identification value for the user (the user identification value is a pre-issued n for the user ( n is a natural number greater than or equal to 3)) The number of digits constituting the main password of the number of digits k (k is a natural number greater than or equal to 2) pre-issued for the user is the derivative of the polynomial of the n-1 degree having as a coefficient the number of digits of each digit . Maintaining a user identification value storage unit in which k differential coefficients generated by inputting each digit constituting the auxiliary password are sequentially concatenated and calculated ) are stored , the above from users, generating an identity authentication event for performing identity authentication for the user when a display command for traffic law violation history information for the first period is applied; Generating an input request message requesting input of an n-digit primary password and a k-digit auxiliary password issued to the user in advance and displaying the input request message on the screen, in response to the input request message from the user, n-digit number When a first main password and a first auxiliary password of k digits are input, generating an n-1 order polynomial having as a coefficient the numbers of each digit constituting the first main password, the n-1 order polynomial When generated, after generating a derivative for the n-1 order polynomial, by applying the number of each digit constituting the first auxiliary password to the derivative as an input, k first differential coefficients are generated, Generating a first concatenated value by concatenating k first differential coefficients, and when the first concatenated value is generated, the user identification value stored in the user identification value storage unit is equal to the first concatenated value. and checking if they are the same, processing the user as having been authenticated, and then generating the traffic law violation history information display event.

In addition , according to an embodiment of the present invention, the operating method of the electronic terminal device includes a plurality of grades pre- designated to represent a law-abiding driving level , and a range value of a preset driving index corresponding to each of the plurality of grades Storing and maintaining the recorded grade table, when a command to display grade information on the law-abiding driving level of the user is applied, accesses the signal violation history storage server, and when the command to display grade information is applied Based on the current point in time , Counting a fourth number, which is the number of signal violation history information composed of date and time information belonging to a second period in the past, corresponding to a predetermined period before, accessing the intrusion history storage server, and belonging to the second period Counting the fifth number, which is the number of intrusion history information in the curfew section composed of date and time information, and accessing the speed violation history storage server, the number of speed violation history information composed of date and time information belonging to the second period counting the sixth number, and when the fourth, fifth, and sixth numbers are counted, applying different weights preset to the fourth, fifth , and sixth numbers Then, a three-dimensional vector having the fourth, fifth, and sixth numbers to which weights are applied as components is generated, and the Manhattan norm of the vector is calculated as a first driving index for the user, Extracting a first grade recorded in correspondence with a range value to which the first driving index belongs, from the grade table, and displaying information on the first grade on a screen when the first grade is extracted. may further include.

In the above , the operating method of the electronic terminal device according to an embodiment of the present invention has been described with reference to FIG . 4 . Here, since the operating method of the electronic terminal device according to an embodiment of the present invention may correspond to the configuration of the operation of the electronic terminal device 110 described with reference to FIGS. 1 to 3 , a more detailed description thereof will be omitted. an electronic terminal device according to an embodiment of the present invention may be implemented as a computer program stored in a storage medium for execution through a combination with a computer.

In addition , the operating method of the electronic terminal device according to an embodiment of the present invention may be implemented in the form of program instructions that can be executed through various computer means and recorded in a computer readable medium. The computer readable medium may include program instructions, data files, data structures, etc. alone or in combination. Program instructions recorded on the medium may be those specially designed and configured for the present invention or those known and usable to those skilled in computer software . Examples of computer-readable recording media include magnetic media such as hard disks, floppy disks and magnetic tapes, optical media such as CD-ROMs and DVDs, and magnetic media such as floptical disks. - includes hardware devices specially configured to store and execute program instructions, such as magneto-optical media, and ROM, RAM, flash memory, and the like. Examples of program instructions include high-level language codes that can be executed by a computer using an interpreter, as well as machine language codes such as those produced by a compiler.

As described above, the present invention has been described by specific details such as specific components and limited embodiments and drawings, but these are provided to help a more general understanding of the present invention, and the present invention is not limited to the above embodiments. , Those skilled in the art in the field to which the present invention belongs can make various modifications and variations from these descriptions.

Therefore , the spirit of the present invention should not be limited to the described embodiments, and it will be said that not only the claims to be described later, but also all modifications equivalent or equivalent to these claims belong to the scope of the present invention.

## Claims

1. GPS ( Global Positioning System ) for location tracking and forward In the electronic terminal device attachable to a two-wheeled vehicle equipped with a camera for photographing , comprising:

   traffic lights exist A plurality of pre -designated branches a location information storage unit in which traffic light location information is stored;
   a map data storage unit for storing map data in which information on a two-wheeled vehicle passable section and a speed limit for each road is designated;
   Based on the GPS , By tracking the current location information of the two-wheeled vehicle , the two-wheeled vehicle, plural of any one of the traffic light location information a signal violation determination event generating unit generating a signal violation determination event for determining whether the two-wheeled vehicle violates a signal whenever it is determined that the two-wheeled vehicle enters an area within a preset radius centered on the traffic light location information;
   When the signal violation determination event occurs, after acquiring a front image by photographing the front through the camera , detecting a traffic light area from the front image based on a prespecified object detection model for detecting a traffic light area, a signal confirmation unit that checks whether the traffic light signal is a stop signal through pixel value analysis of the traffic light area ;
   the traffic light signal is a stop signal , based on the GPS, whether the two-wheeled vehicle is moving is checked, and if it is confirmed that the two-wheeled vehicle is moving, it is determined that the two-wheeled vehicle violates the signal, and then the two-wheeled vehicle a signal violation history information storage unit for generating signal violation history information consisting of date and time information for a point in time when it is determined that the signal violation was determined and storing it in a predetermined signal violation history storage server;
   an intrusion-determination event generating unit generating an intrusion-determination event for determining whether or not the two-wheeled vehicle trespasses into the prohibited-traffic-section at a predetermined first time interval;
   When the no-traffic section intrusion determination event occurs, based on the GPS , By tracking the current location information of the two-wheeled vehicle and simultaneously loading the map data stored in the map data storage unit, the current location of the two-wheeled vehicle is a two-wheeled vehicle confirmation unit that checks whether the two-wheeled vehicle belongs to the passable section on a map;

The current position of the two-wheeled vehicle, If it is confirmed that the two-wheeled vehicle does not belong to the passable section on the map, it is determined that the two-wheeled vehicle has entered the prohibited section, and then the date and time information for the time when the two-wheeled vehicle is determined to have entered the prohibited section an intrusion history information storage unit that generates and stores intrusion history information in the configured traffic prohibition section in a pre-specified intrusion history storage server;

a speed violation determination event generating unit generating a speed violation determination event for determining whether the two-wheeled vehicle is speeding at a predetermined second time interval;

When the speed violation determination event occurs, based on the GPS , The current location information of the two-wheeled vehicle is tracked and the map data stored in the map data storage unit is loaded at the same time, the speed limit specified on the road according to the current location of the two-wheeled vehicle is checked on the map, and the GPS a speed confirmation unit that measures a moving speed of the two-wheeled vehicle as a basis and checks whether the moving speed exceeds the limit speed ; and

When it is confirmed that the moving speed exceeds the speed limit, after it is determined that the two-wheeled vehicle violates the speed, speed violation history information consisting of date and time information about the time point at which it is determined that the two-wheeled vehicle violates the speed is provided. Speed violation history information storage unit that is created and stored in a pre-specified speed violation history storage server.

2. The electronic terminal device of claim 1, wherein the signal confirmation unit comprising:

a color histogram calculation unit that calculates a color histogram from the traffic light area when the traffic light area is detected;

a ratio calculation unit for calculating an existence ratio of the number of pixels belonging to a predetermined pixel value range based on the total number of pixels for each RGB color channel in the color histogram ; and

If the abundance ratio calculated for the Red color channel is , the abundance ratio calculated for the Green color channel and the abundance ratio calculated for the Blue color channel are As a result of the check, if it is confirmed that the abundance ratio calculated for the red color channel exceeds both the abundance ratio calculated for the green color channel and the abundance ratio calculated for the blue color channel , the traffic light Check that the signal is a stop signal ; if not , the traffic light signal is not a stop signal Stop signal confirmation part to check.

3. The electronic terminal device of claim 1, further comprising:

From the user of the electronic terminal device, When a display command for traffic law violation history information for the first period designated by the user is applied, a display event generating a traffic law violation history information display event for displaying traffic law violation history information for the first period generator;

traffic law violation history information display event occurs , accesses to the signal violation history storage server , counts a first number, which is the number of signal violation history information composed of date and time information belonging to the first period , and Accessing the history storage server, counting the second number, that is, the number of intrusion history information in the prohibited section composed of date and time information belonging to the first period, accessing the speed violation history storage server, in the first period a counting unit counting a third number that is the number of speed violation history information composed of date and time information to which it belongs; and

the first number, the second number, and the third number are counted, information on the first number, information on the second number, and information on the third number are stored during the first period. Display unit displayed on the screen as traffic law violation history information.

4. The electronic terminal device of claim 3, wherein the display event generating unit comprising:

counts each digit constituting the main password of n (n is a natural number of 3 or more) digits pre-issued for the user In the derivative with respect to the n -1 order polynomial with A user identification value storage unit in which k differential coefficients generated by inputting each digit constituting the auxiliary password are sequentially concatenated and calculated - are stored ;

from the user, an identity authentication event generating unit generating a identity authentication event for performing identity authentication for the user when a display command for traffic law violation history information for the first period is applied ;

When the identity authentication event occurs, an input request message display unit generating an input request message requesting the user to input an n-digit primary password and a k-digit auxiliary password issued to the user in advance and displaying the input request message on the screen. ;

n- digits having each digit constituting the first main password as a coefficient a polynomial generation unit that generates a first-order polynomial;

When the n-1 order polynomial is generated, after generating a derivative with respect to the n-1 order polynomial, by applying the number of each digit constituting the first auxiliary password to the derivative as an input, k first a concatenation unit generating a first concatenated value by generating differential coefficients and concatenating the k first differential coefficients; and

the first concatenated value is generated, it is checked whether the user identification value stored in the user identification value storage unit is the same as the first concatenated value, and if it is confirmed that the user identification value is the same, the identity authentication for the user is completed. After that, an event generation processing unit generating the traffic law violation history information display event.

5. The electronic terminal device of claim 1, further comprising:

maintenance unit that stores and maintains a grade table in which a plurality of grades designated as representing a law-abiding driving level and a range value of a preset driving index corresponding to each of the plurality of grades are recorded;

command to display grade information on the user's law-abiding driving level is applied from the user, the server is connected to the signal violation history storage server, and based on the current point in time at which the command to display grade information is applied, Counting a fourth number, which is the number of signal violation history information composed of date and time information belonging to a second period in the past, corresponding to a predetermined period before, accessing the intrusion history storage server, and belonging to the second period Counting the fifth number, which is the number of intrusion history information in the curfew section composed of date and time information, and accessing the speed violation history storage server, the number of speed violation history information composed of date and time information belonging to the second period a history information counting unit that counts a sixth number of N; and

When the fourth number, the fifth number, and the sixth number are counted, different preset weights are applied to the fourth number, the fifth number, and the sixth number. Then, a three-dimensional vector having the fourth, fifth, and sixth numbers as components with weights applied thereto is generated, and the Manhattan norm of the vector is used as the first driving index for the user. a grade extraction unit extracting a first grade recorded in correspondence with a range value to which the first driving index belongs, from the grade table after calculating; and

When the first grade is extracted, a grade information display unit for displaying information on the first grade on a screen.

Fig. 1

Fig. 2

Fig. 3

Fig. 4

```
                        ( start )
                            │
                            ▼
┌─────────────────────────────────────────────────────────────────┐
│ Maintains an information storage unit in which location information of a plurality of pre-designated │─ S411
│ traffic lights is stored as a point where traffic lights exist                                      │
└─────────────────────────────────────────────────────────────────┘
                            │
                            ▼
┌─────────────────────────────────────────────────────────────────┐
│ Maintains a map data storage unit that stores map data in which information on two-wheeled vehicle │─ S412
│ passable sections and speed limits for each road is specified                                        │
└─────────────────────────────────────────────────────────────────┘
                            │
                            ▼
┌─────────────────────────────────────────────────────────────────┐
│ Tracking the current location information of the two-wheeled vehicle based on GPS to determine      │
│ whether the two-wheeled vehicle is signaled whenever it is determined that the two-wheeled vehicle  │─ S413
│ enters an area within a preset radius centered on one of the plurality of traffic light location information │
│ Generate signal violation judgment event                                                            │
└─────────────────────────────────────────────────────────────────┘
                            │
                            ▼
┌─────────────────────────────────────────────────────────────────┐
│ When a traffic violation determination event occurs, after obtaining a front image by taking a picture of │
│ the front through the camera, the traffic light area is detected from the front image based on a    │─ S414
│ prespecified object detection model for detecting the traffic light area, and pixel value analysis for the │
│ traffic light area is performed. Check whether the traffic light signal is a stop signal through     │
└─────────────────────────────────────────────────────────────────┘
                            │
                            ▼
┌─────────────────────────────────────────────────────────────────┐
│ When it is determined that the traffic light signal is a stop signal, if the two-wheeled vehicle is │
│ confirmed to be moving based on the GPS, it is determined that the two-wheeled vehicle violates the │
│ signal, and the time point at which it is determined that the two-wheeled vehicle violates the signal │─ S415
│ Creates signal violation history information consisting of date and time information for and stores it in a │
│ pre-specified signal violation history storage server                                               │
└─────────────────────────────────────────────────────────────────┘
                            │
                            ▼
┌─────────────────────────────────────────────────────────────────┐
│ At a preset first time interval, an event for determining whether a two-wheeled vehicle is intruding into a │─ S416
│ prohibited area is generated                                                                         │
└─────────────────────────────────────────────────────────────────┘
                            │
                            ▼
┌─────────────────────────────────────────────────────────────────┐
│ When an intrusion determination event occurs in a prohibited area, the location information of the two- │
│ wheeled vehicle is tracked based on GPS and at the same time the map data stored in the map data    │─ S417
│ storage unit is loaded, so that the current location of the two-wheeled vehicle belongs to the two- │
│ wheeled vehicle passable section on the map. check whether there is                                  │
└─────────────────────────────────────────────────────────────────┘
                            │
                            ▼
┌─────────────────────────────────────────────────────────────────┐
│ If the current location of the two-wheeled vehicle is confirmed not to belong to the two-wheeled    │
│ vehicle passable area on the map, the date and time information of the time when the two-wheeled     │─ S418
│ vehicle is determined to have entered the prohibited area after it is determined that the two-wheeled │
│ vehicle has entered the prohibited area Creates intrusion history information between curfew zones   │
│ composed of and stores it in a pre-specified intrusion history storage server                        │
└─────────────────────────────────────────────────────────────────┘
                            │
                            ▼
┌─────────────────────────────────────────────────────────────────┐
│ Generates a speed violation judgment event to determine whether the two-wheeled vehicle is speeding │─ S419
│ at a preset second time interval                                                                     │
└─────────────────────────────────────────────────────────────────┘
                            │
                            ▼
┌─────────────────────────────────────────────────────────────────┐
│ When a speed violation determination event occurs, the current location information of the two-     │
│ wheeled vehicle is tracked based on GPS and at the same time the map data stored in the map data    │─ S420
│ storage unit is loaded to set the speed limit specified on the road according to the current location of │
│ the two-wheeled vehicle on the map. and check whether the moving speed exceeds the speed limit by   │
│ measuring the moving speed of the two-wheeled vehicle based on GPS                                   │
└─────────────────────────────────────────────────────────────────┘
                            │
                            ▼
┌─────────────────────────────────────────────────────────────────┐
│ If it is confirmed that the moving speed exceeds the speed limit, after determining that the two-   │
│ wheeled vehicle violated the speed, the speed violation history information consisting of the date and │─ S421
│ time information of the time when the two-wheeled vehicle was judged to have violated the speed is   │
│ generated to set a pre-specified speed. Save Violation History Save to Server                         │
└─────────────────────────────────────────────────────────────────┘
                            │
                            ▼
                        ( end )
```

Europäisches
Patentamt

European
Patent Office

Office européen
des brevets

# EUROPEAN SEARCH REPORT

**Application Number**

EP 23 19 5701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/238014 A1 (RINGNE AJAY [US]) 28 July 2022 (2022-07-28) * abstract * * figures 1-3 * * paragraphs [0004] - [0007], [0014] - [0018] * * claims 1-20 * | 1-5 | INV. G08G1/01 G08G1/017 G08G1/052 G08G1/0962 G08G1/00 G06F21/31 G06F21/45 |
| Y | US 2021/304527 A1 (HAGIWARA YUKI [JP] ET AL) 30 September 2021 (2021-09-30) * abstract * * figures 1-3,6 * * paragraphs [0006], [0019], [0020], [0024], [0026], [0041] - [0046], [0064], [0065], [0092] * * claims 1-4 * | 1-5 | H04L9/32 H04L9/40 H04W12/08 G06V20/58 |
| Y | US 2016/232785 A1 (WANG KEVIN SUNLIN [US]) 11 August 2016 (2016-08-11) * abstract * * figures 1,9,10,12 * * paragraphs [0016], [0017], [0020], [0021], [0027], [0028], [0044], [0045], [0048] - [0050], [0075], [0094], [0095], [0101], [0132], [0138] * * paragraphs [0141] - [0145] * * claims 1-60 * | 1-5 | |

-/--

**TECHNICAL FIELDS SEARCHED (IPC)**

G08G

The present search report has been drawn up for all claims

| Place of search | Date of completion of the search | Examiner |
|---|---|---|
| The Hague | 31 January 2024 | Quartier, Frank |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 23 19 5701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DAWAM EDWARD SWARLAT ET AL: "Traffic Light Detection and Recognition in Autonomous Vehicles (AVs)", 2022 IEEE INTL CONF ON DEPENDABLE, AUTONOMIC AND SECURE COMPUTING, INTL CONF ON PERVASIVE INTELLIGENCE AND COMPUTING, INTL CONF ON CLOUD AND BIG DATA COMPUTING, INTL CONF ON CYBER SCIENCE AND TECHNOLOGY CONGRESS (DASC/PICOM/CBDCOM/CYBERSCITECH), IEEE, 12 September 2022 (2022-09-12), pages 1-6, XP034245160, DOI: 10.1109/DASC/PICOM/CBDCOM/CY55231.2022.9927813 [retrieved on 2022-12-13] * the whole document * | 1-5 | |
| Y | US 2008/077984 A1 (KIM KYONG-SU [KR]) 27 March 2008 (2008-03-27) * abstract * * figures 2,3 * * paragraphs [0008] - [0012], [0035] - [0039] * * claims 1-11 * | 4 | |
| A | US 2016/196744 A1 (RAZMI JAVAD [DE]) 7 July 2016 (2016-07-07) * abstract * * paragraphs [0001], [0011], [0013], [0015], [0017], [0024], [0034], [0035], [0049] - [0054], [0062], [0096], [0109], [0122] * * claims 1-39 * | 1-5 | TECHNICAL FIELDS SEARCHED (IPC) |

The present search report has been drawn up for all claims

| Place of search | Date of completion of the search | Examiner |
|---|---|---|
| The Hague | 31 January 2024 | Quartier, Frank |

EPO FORM 1503 03.82 (P04C01)

## ANNEX TO THE EUROPEAN SEARCH REPORT
## ON EUROPEAN PATENT APPLICATION NO.

EP 23 19 5701

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2024

| Patent document cited in search report | Publication date | Patent family member(s) | Publication date |
|---|---|---|---|
| US 2022238014 A1 | 28-07-2022 | NONE | |
| US 2021304527 A1 | 30-09-2021 | CN 112567436 A | 26-03-2021 |
| | | DE 112019004002 T5 | 12-05-2021 |
| | | JP 7016959 B2 | 14-02-2022 |
| | | JP WO2020031827 A1 | 26-08-2021 |
| | | US 2021304527 A1 | 30-09-2021 |
| | | WO 2020031827 A1 | 13-02-2020 |
| US 2016232785 A1 | 11-08-2016 | NONE | |
| US 2008077984 A1 | 27-03-2008 | KR 100756336 B1 | 06-09-2007 |
| | | US 2008077984 A1 | 27-03-2008 |
| | | US 2014051396 A1 | 20-02-2014 |
| | | US 2014295799 A1 | 02-10-2014 |
| | | US 2015181429 A1 | 25-06-2015 |
| US 2016196744 A1 | 07-07-2016 | US 2016196744 A1 | 07-07-2016 |
| | | WO 2015022567 A1 | 19-02-2015 |

EPO FORM P0459

For more details about this annex : see Official Journal of the European Patent Office, No. 12/82